Europäisches Patentamt

European Patent Office

Office européen des brevets

(11) Publication number: **0 187 507 B1**

# EUROPEAN PATENT SPECIFICATION

(45) Date of publication of patent specification: **13.03.91**　(51) Int. Cl.⁵: **H01K 1/28**, C03B 23/04, C03B 23/11

(21) Application number: **85309290.6**

(22) Date of filing: **19.12.85**

(54) Improvements in tungsten halogen incandescent lamps.

(30) Priority: **09.01.85 GB 8500511**

(43) Date of publication of application:
**16.07.86 Bulletin  86/29**

(45) Publication of the grant of the patent:
**13.03.91 Bulletin  91/11**

(84) Designated Contracting States:
**DE FR GB IT NL SE**

(56) References cited:
**DE-A- 1 489 467**
**US-A- 3 496 401**
**US-A- 3 732 455**

(73) Proprietor: **THORN EMI PLC**
**Thorn Emi House Upper Saint Martin's Lane**
**London, WC2H 9ED(GB)**

(72) Inventor: **Pochin, Joseph Harry**
**5, Chalfont Close**
**Melton Mowbray Leicestershire(GB)**

(74) Representative: **Fleming, Ian Alexander et al**
**THORN EMI Patents Limited The Quadrangle**
**Westmount Centre Uxbridge Road**
**Hayes Middlesex, UB4 0HB(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to tungsten halogen incandescent lamps, more particularly but not exclusively to those lamps known as miniature glass halogen lamps.

Miniature glass halogen lamps which comprise an envelope of hard glass such as aluminosilicate or borosilicate and a fill including a rare gas such as krypton or xenon and a halogen, for example bromine, are known. They include a tungsten filament and operate on the tungsten halogen cycle. The invention, however, is generally applicable to incandescent lamps which incorporate a halogen whether or not the tungsten halogen cycle is fully operative and term "tungsten halogen incandescent lamp" should be so construed. Such lamps have been used in such applications as torches and miners lamps for general illuminations. Recently it has been proposed to provide miniature glass halogen lamps for use as auto lamps such as, stop and tail lights, side lights and indicator lights.

However it has been found that the light distribution produced from a fitting comprising a known glass halogen lamp and a front lens only, that is, no reflector, does not comply with the required specification.

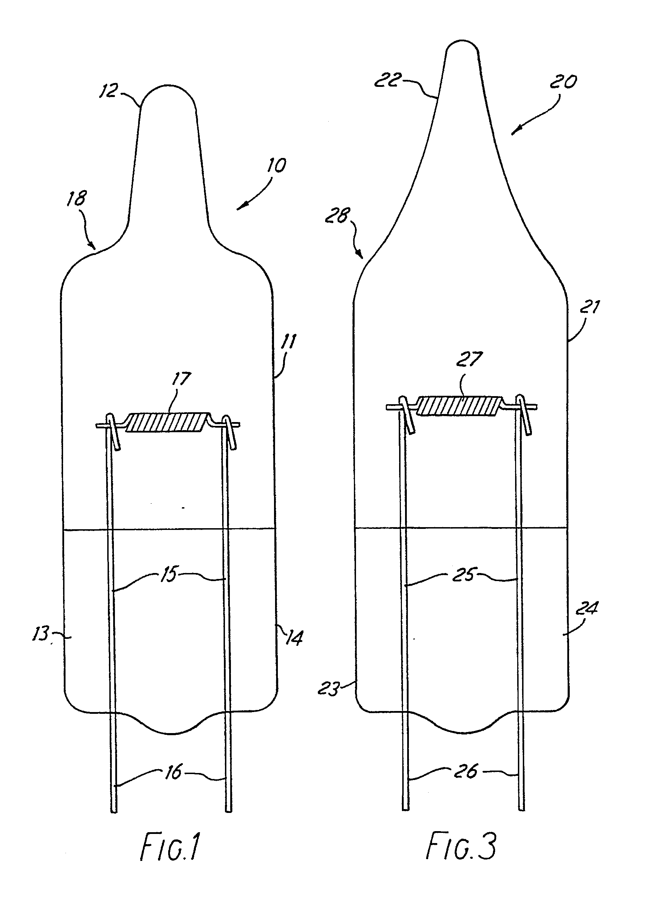

Figure 1 shows a known type of miniature tungsten halogen incandescent lamp 10. This comprises a tubular envelope of hard glass such as, for example aluminosilicate or borosilicate glass having a body portion 11, a tip off portion 12 and a seal portion 13 which usually comprises a pinch seal 14. Sealed within the pinch seal 14 are molybdenum leads 15 joined to nickel alloy outer leads 16. The molybdenum leads 15 support a tungsten filament 17 within the envelope which also includes a rare gas such as krypton or xenon as well as a halogen. It will be especially noted that body portion 11 has a squared off end portion 18 providing a so called "flat end".

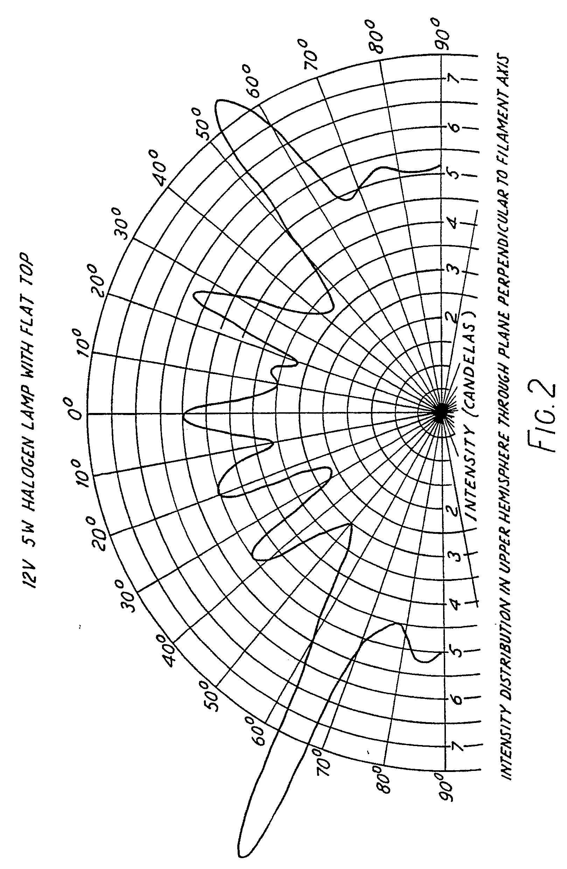

In some auto lamp applications the light requires to be thrown forward through end portion 18 onto a lens whereas in torches and miners lamps used for general illumination the light utilised is the reflected light which emanates through body portion 11. On testing, the light coming through flat end 18 had a distribution shown in Figure 2, wherein the peaks and troughs resulted in a beam pattern comprising concentric rings of varying intensity. Such a distribution is unsuitable for auto lamp applications mentioned above.

DE-A-1489467 (Patent-Treuhand-Gesellschaft) discloses a tungsten halogen lamp which can be used for motor vehicle headlamps. The lamp bulb, of quartz glass or another glass of high melting point, has a pinch and a seal-off point. During the manufacture of the lamp, a carbon deposit is produced and it is possible, dependent on whether stray light is produced at the pinch or at the seal-off point, to shift the carbon deposit to that location.

The present invention is concerned with the light intensity distribution of light emitted from the tip-end or seal-off point of a tungsten halogen lamp.

According to a first aspect of the present invention there is provided a tungsten halogen incandescent lamp comprising a hard glass envelope including a body portion having a tip at one end and a seal portion at the other end characterised in that the tip end, except of its very end, comprises a smoothly curved taper, said taper having a rate of change of curvature which is sufficiently small that the light intensity distribution for light from the tip end has peak values within the range of 20% less than to 50% greater than the average value.

According to a further aspect of the invention there is provided a method of producing a tungsten halogen incandescent lamp including the steps of heating tubular glass material and reducing the diameter of the tubular material by drawing whilst the tubular material is being spun to produce a smoothly curved taper for a tip end wherein, except of the very end of the tip end, said taper has a rate of change of curvature which is sufficiently small that the light intensity distribution for light from said tip end has peak values within the range of 20% less than to 50% greater than the average value.

In a preferred embodiment of the invention the tip end is produced by heating a glass envelope and drawing down the softened glass whilst it is being spun so that a smoothly curved conical tapering end is produced. On testing this tapered tip end it was found the light distribution coming therefrom was much more uniform and consequently was more suitable for the required beam configuration for auto lights.

The invention will now be described by way of example only and with reference to the accompanying figures wherein:

Figure 1 is an illustration of a known type of miniature glass halogen lamp as described previously;

Figure 2 is a graph of intensity distribution in the upper hemisphere through a plane perpendicular to the filament axis of lamp of Figure 1 as described previously;

Figure 3 is a tungsten halogen incandescent lamp in accordance with the present invention, and Figure 4 is a graph of intensity in the upper hemisphere through a plane perpendicular to the filament axis of the lamp of Figure 3.

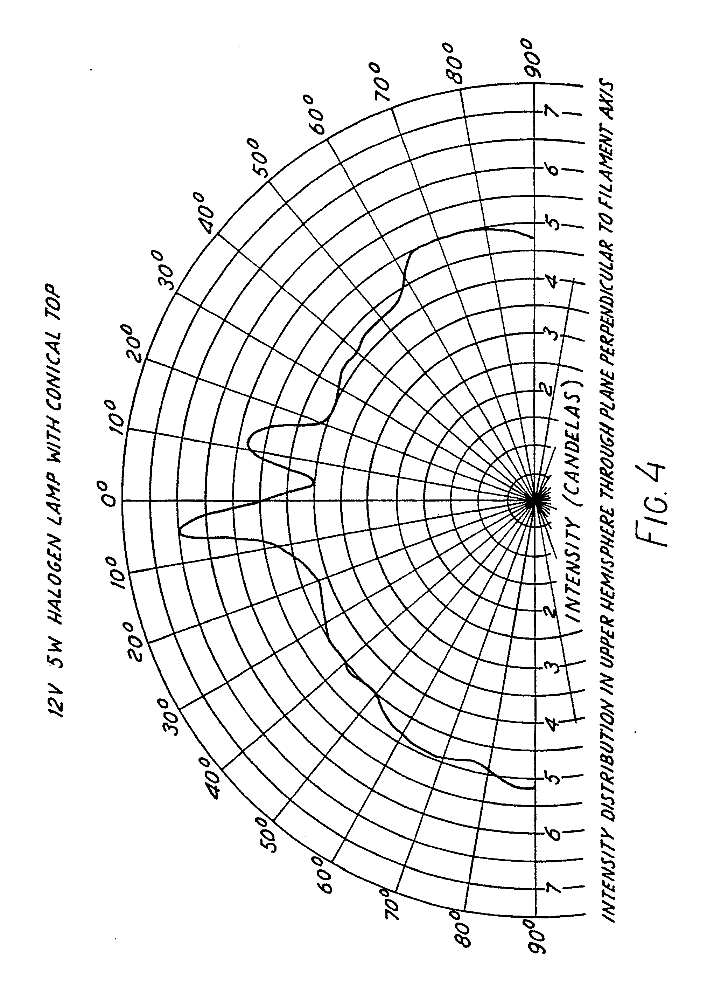

In Figure 3, reference numeral 20 illustrates a miniature tungsten halogen incandescent lamp in accordance with the present invention. This comprises a tubular envelope of hard glass, such as, for example, aluminosilicate or borosilicate glass having a body portion 21, a tip off portion 22 and a seal portion 23 which usually comprises a pinch seal 24. Sealed, within the pinch seal 24 are molybdenum leads 25 joined to nickel alloy outer leads 26. The molybdenum leads 25 support tungsten filament 27 within the envelope which also includes a rare gas such as krypton or xenon and a halogen, for example, bromine. In accordance with the present invention it will be noted that the flat end 18 of the lamp of Figure 1 has been dispensed with and instead the tip off end tapers smoothly from body portion 21 to the tip 22. There is no well defined shoulder portion but a smoothly curved transition in the area 28. On applying a standard light intensity distribution test testing a lamp with this end configuration it was found to produce the intensity distribution shown in Figure 4 wherein the peak value is in the range +40 to 50%; -15 to 20% of the average value. This only has two small peaks as shown and provides a much more uniform beam pattern.

We have found that it is possible to provide the desired end configuration by heating the mid-portion of a short length of suitable tubular glass material to a temperature of around 1050°C then reducing the tube diameter by drawing whilst the tube is being spun at about 300 RPM until the inside diameter before tip off is between 0.5mm and 1.0mm.

This provides a smooth curved conical taper as shown in Figure 3. This makes the method eminently suitable for mass production methods (required in producing lamps for the auto industry).

It is envisaged lamps according to the present invention will range from 2W to 20W. In a 5W lamp in accordance with the invention, the tubular envelope material comprise 7 to 8 mm outside diameter, lead wire diameter (nickel) of 0.4 mm, lead wire diameter (molybdenum) of 0.3mm and the filament was a single coil type. The envelope contained a fill of 8 atmospheres of krypton at NTP and a halogen comprising a liquid dose of 25 micro gms of bromine.

## Claims

1. A tungsten halogen incandescent lamp comprising a hard glass envelope including a body portion having a tip at one end and a seal portion at the other end characterised in that the tip end, except at its very end, comprises a smoothly curved taper, said taper having a rate of change of curvature which is sufficiently small that the light intensity distribution for light from the tip end has peak values within the range of 20% less than to 50% greater than the average value.

2. A tungsten halogen incandescent lamp according to Claim 1 wherein the lamp is an auto lamp.

3. A tungsten halogen incandescent lamp according to Claim 1 wherein the halogen includes bromine.

4. A method of producing a tungsten halogen incandescent lamp including the steps of heating tubular glass material and reducing the diameter of the tubular material by drawing whilst the tubular material is being spun to produce a smoothly curved taper for a tip end wherein, except at the very end of the tip end, said taper has a rate of change of curvature which is sufficiently small that the light intensity distribution for light from said tip end has peak values within the range of 20% less than to 50% greater than the average value.

5. A method according to Claim 4 wherein the tubular material is spun at about 300 revolutions per minute.

6. A method according to Claim 4 wherein the tubular material is heated to about 1050°C.

7. A method according to Claim 4 including the step of testing the lamp to ensure that the peak values of light intensity lie within the range of 20% less than to 50% greater than the average light intensity.

## Revendications

1. Une lampe à incandescence à tungstène halogène comprenant une enveloppe en verre dur présentant une partie de corps possédant une pointe à une extrémité et une partie de joint à l'autre extrémité, caractérisée en ce que l'extrémité de pointe sauf tout-à-fait à son extrémité, comprend un cône légèrement incurvé, ledit cône présentant un taux de variation de courbure qui est suffisamment faible pour que la répartition d'intensité lumineuse de la lumière provenant de cette extrémité de pointe présente des valeurs de pic comprises dans la place s'étendant de 20 % de moins que la valeur moyenne à 50 % de plus qu'elle.

2. Une lampe à incandescence à tungstène-halogène selon la revendication 1 dans laquelle la lampe est une lampe d'automobile.

3. Une lampe à incandescence à tungstène halogène selon la revendication 1 dans laquelle l'halogène comprend du brome.

4. Un procédé de production d'une lampe à incandescence tungstène-halogène comprenant les étapes consistant à chauffer la matière tubulaire de verre et à réduire le diamètre de la matière tubulaire par étirage tandis que la matière tubulaire est centrifugée pour produire un cône légèrement incurvé en vue d'une extrémité de pointe dans laquelle, sauf tout-à-fait à l'extrémité de pointe, ledit cône présente un taux de variation de courbure qui est suffisamment petit pour que la répartition d'intensité lumineuse de la lumière provenant de ladite extrémité de pointe présente des valeurs de pic comprises dans la plage s'étendant de 20 % de moins que la valeur moyenne à 50 % de plus qu'elle.

5. Un procédé selon la revendication 4 dans lequel la matière tubulaire est centrifugée à environ 300 tours par minute.

6. Un procédé selon la revendication 4 dans lequel la matière tubulaire est chauffée à environ 1050° C.

7. Un procédé selon la revendication 4 comprenant l'étape consistant à vérifier la lampe pour garantir que la valeur de pic de l'intensité lumineuse est située à l'intérieur de la plage comprise entre 20 % de moins que l'intensité lumineuse moyenne et 50 % de plus qu'elle.

**Ansprüche**

1. Wolfram-Halogen-Glühlampe mit einer Hartglashülle, die einen Hauptteil aufweist, der an einem Ende eine Spitze und am anderen Ende ein Dichtungsteil besitzt, dadurch gekennzeichnet, daß das Spitzenende mit Ausnahme seines äußersten Endes eine sanft gekrümmte Verjüngung aufweist, daß die Verjüngung eine Änderungsrate der Krümmung besitzt, die ausreichend klein ist, damit die Lichtintensitätsverteilung für Licht vom Spitzenende Spitzenwerte hat, die im Bereich von 20% weniger als bis 50% größer als der Durchschnittswert liegen.

2. Wolfram-Halogen-Glühlampe nach Anspruch 1, wobei die Lampe eine Kraftfahrzeuglampe ist.

3. Wolfram-Halogen-Glühlampe nach Anspruch 1, bei der das Halogen Brom einschließt.

4. Verfahren zur Herstellung einer Wolfram-Halogen-Glühlampe, das die Schritte umfaßt: Erhitzen von rohrförmigem Glasmaterial und Vermindern des Durchmessers des rohrförmigen Materials durch Ziehen bei gleichzeitigem Drehen des rohrförmigen Materials, um eine sanft gekrümmte Verjüngung für ein Spitzenende zu erzeugen, wobei die Verjüngung mit Ausnahme des äußersten Endes des Spitzenendes eine Änderungsrate der Krümmung besitzt, die ausreichend klein ist, damit die Lichtintensitätsverteilung für Licht vom Spitzenende Spitzenwerte hat, die im Bereich von 20% weniger als bis zu 50% größer als der Durchschnittswert liegen.

5. Verfahren nach Anspruch 4, bei dem das rohrförmige Material mit etwa 300 Umdrehungen pro Minute gedreht wird.

6. Verfahren nach Anspruch 4, bei dem das rohrförmige Material auf etwa 1050° C erhitzt wird.

7. Verfahren nach Anspruch 4, das den Schritt der Prüfung der Lampe umfaßt, um sicherzustellen, daß die Spitzenwerte der Lichtintensität innerhalb des Bereiches von 20% weniger als bis 50% größer als die durchschnittliche Lichtintensität liegen.

Fig.1

Fig.3

12V 5W HALOGEN LAMP WITH FLAT TOP

INTENSITY (CANDELAS)

INTENSITY DISTRIBUTION IN UPPER HEMISPHERE THROUGH PLANE PERPENDICULAR TO FILAMENT AXIS

FIG.2

12V 5W HALOGEN LAMP WITH CONICAL TOP

INTENSITY DISTRIBUTION IN UPPER HEMISPHERE THROUGH PLANE PERPENDICULAR TO FILAMENT AXIS

FIG. 4

EP 0 187 507 B1